# FASCICULE DE BREVET EUROPEEN

(11) **EP 3 725 580 B1**
(45) Date de publication et mention de la délivrance du brevet: **08.07.2026**
(21) Numéro de dépôt: 20170138.0
(22) Date de dépôt: 17.04.2020
(51) Int. Cl.: B60L 5/20, B60L 5/24

(54) **PANTOGRAPHE ÉQUIPÉ D'UN SYSTÈME DE DÉTECTION**
PANTOGRAF, DER MIT EINEM ERKENNUNGSSYSTEM AUSGESTATTET IST
PANTOGRAPH PROVIDED WITH A DETECTION SYSTEM

(30) Priorité: 19.04.2019 FR 1904239
(43) Date de publication de la demande: 21.10.2020
(73) Titulaire: SNCF RESEAU, 93418 La Plaine Saint-Denis Cedex (FR)
(72) Inventeur: DUBOIS, Samuel, 59800 Lille (FR); AVRONSART, Stéphane, 95170 Deuil la Barre (FR); BLANVILLAIN, Gérard, 37270 Veretz (FR)
(74) Mandataire: Argyma

(56) Documents cités:
- EP-A1- 2 565 612
- EP-A1- 2 998 148
- CN-A- 108 569 146
- DE-A1- 19 529 070

## Description

La présente invention se rapporte à un pantographe instrumenté, réalisant un captage de courant ou non, configuré pour détecter au moins un paramètre d'un fil de contact pour ligne d'alimentation électrique aérienne de véhicules circulant sur une voie ferrée.

La présente invention se situe notamment dans le domaine des lignes d'alimentation électrique aériennes de véhicules circulant sur une voie ferrée, parfois appelées lignes aériennes de traction électrique.

De telles lignes d'alimentation électrique aériennes comportent généralement un ou deux fils conducteurs électriques suspendus au-dessus de la voie, classiquement suspendus par des pendules à un ou deux câbles porteurs pour former ensemble une caténaire. Dans ce contexte, les fils conducteurs sont parfois appelés fils de contact caténaire.

De manière connue, la ligne d'alimentation électrique fonctionne sous une tension comprise entre 750 Volts et 25000 Volts, usuellement 1500 Volts, 3000 Volts et 15000 Volts. Cependant, l'invention n'est pas limitée à de telles tensions.

Le captage du courant par l'engin ferroviaire (locomotive électrique ou rame automotrice électrique) s'effectue classiquement par un pantographe muni d'un archet pourvu de bandes de frottement, généralement en carbone et/ou en métal (cuivre et/ou acier), qui font office de frotteurs sur la ou les fils de contact de la ligne aérienne et qui permettent de capter l'énergie électrique.

Au fur et à mesure des passages des engins ferroviaires, les fils de contact peuvent être dégradés de sorte que leurs paramètres intrinsèques sont modifiés. Ces paramètres incluent à titre non limitatif une géométrie du fil, une résistance aux chocs ou encore une usure qui se traduit directement par un retrait de matière et donc par une diminution de l'épaisseur; une telle usure des fils de contact favorisant de facto les risques de rupture et donc d'interruption de l'alimentation électrique pour les engins ferroviaires concernés.

Il existe donc un besoin de contrôler les paramètres d'un fil de contact pour ces lignes d'alimentation électrique aérienne de véhicules circulant sur une voie ferrée afin d'anticiper leur entretien et leur maintenance.

On connait de l'art antérieur des pantographes équipés de systèmes de détection comprenant un ou plusieurs capteurs. Ces capteurs sont généralement disposés directement sur le dessus ou au-dessous des bandes de frottement de l'archet, voire entre les deux bandes de frottement de l'archet.

Un inconvénient de ces pantographes réside dans le fait que la place disponible sur l'archet pour disposer les capteurs de mesure est extrêmement limitée. Ainsi, les capteurs utilisés sont généralement de très petites tailles réduisant le champ de détection et par conséquent la précision de la mesure des paramètres du fil de contact. De plus, la fragilité du montage structurel de ces capteurs sur l'archet oblige le véhicule ainsi équipé à circuler à une vitesse fortement dégradée afin de minimiser les contraintes mécaniques exercées sur le pantographe. Par ailleurs le positionnement des capteurs à proximité des bandes de frottement expose ces capteurs à des projections d'eau et de graisse par exemple qui résultent du passage des bandes de frottement de l'archet sur la caténaire et ce, quel que soit le sens de circulation du véhicule. En outre, le document WO 2005003461 divulgue un pantographe instrumenté qui comporte un système de détection relié à la tête de captage du pantographe en déport par rapport à l'axe d'avancement du véhicule portant le pantographe et en amont de la tête de captage.

L'étendue de protection de cette invention est définie dans et limitée par la revendication indépendante ci-jointe.

L'invention vise à pallier tout ou partie de ces inconvénients et concerne à ce titre un pantographe instrumenté configuré pour détecter au moins un paramètre d'un fil de contact pour ligne d'alimentation électrique aérienne de véhicules circulant notamment sur une voie ferrée suivant un axe d'avancement X, le pantographe comprenant :
- Un bâti conçu pour être fixé sur un véhicule,
- Un système articulé s'étendant à partir du bâti,
- Une tête de captage présentant un axe transversal Y sensiblement perpendiculaire à l'axe d'avancement X lorsque le pantographe est fixé sur le véhicule et comportant un arbre support et un archet, l'archet étant muni d'au moins une bande de frottement et étant relié au système articulé au moyen de l'arbre support, et
- Un système de détection comportant au moins un capteur de paramètres d'un fil de contact pour ligne d'alimentation électrique aérienne de véhicules et un dispositif de déport configuré pour disposer ledit au moins un capteur de paramètres à distance de la tête de captage, en déport par rapport à l'axe d'avancement X.

Par l'expression « en déport » on entend un déplacement dudit au moins un capteur de paramètres à distance de la tête de captage par rapport à l'axe d'avancement X. Grâce au dispositif de déport, on profite d'un nouvel espacement disponible pour disposer les capteurs de paramètre. Les capteurs de paramètre sont éloignés des bandes de frottement de l'archet permettant ainsi de les protéger des projections. De plus, il est possible de disposer d'un plus grand nombre de capteurs et d'obtenir un champ de mesure plus vaste, le système de détection est ainsi plus performant. Les capteurs de paramètre sont au moins une caméra et un laser et peuvent en outre comprendre des accéléromètres.

Dans une variante de réalisation, le dispositif de déport est configuré pour disposer ledit au moins un capteur de paramètre à distance de la tête de captage, en déport par rapport à un axe d'élévation Z.

Selon l'invention, ledit au moins un capteur de paramètre est disposé en amont de la tête de captage.

Selon une caractéristique le système de détection comporte des barres de fixation s'étendant selon une direction parallèle à l'axe transversal Y et des plaques de fixation fixées aux barres de fixation et s'étendant dans un plan perpendiculaire à l'axe transversal Y.

Cette caractéristique permet de fixer le système de détection sur différent type de pantographe, de façon robuste, et par sa faible emprise aérodynamique (trainée), d'atteindre des vitesses de circulation de véhicule élevées tout en évitant les risques de détérioration du système de détection ou de poussée trop importante sur la caténaire.

Selon une autre caractéristique, le système de détection comporte au moins trois barres de fixation parallèles entre elles et agencées en triangulation.

Cette caractéristique permet d'obtenir une répartition homogène des efforts dus à la masse du système de détection fixé sur le pantographe et de garantir un maintien rigide de l'ensemble des capteurs de paramètres.

Selon une autre caractéristique, les barres de fixation sont reliées à l'arbre support au moyen d'une équerre de fixation.

Selon une variante de réalisation, les plaques de fixation sont parallèles les unes par rapport aux autres.

Selon une variante de réalisation, les plaques de fixation sont ajourées.

Cette caractéristique permet de réduire la masse du système de détection et d'alléger par conséquent la masse totale du pantographe.

Selon une caractéristique, les plaques de fixation sont reliées entre elles par au moins une barre de liaison s'étendant selon une direction parallèle à l'axe transversal Y. Cette caractéristique permet d'empêcher que les capteurs ne s'écartent les uns des autres pendant la circulation du véhicule et assure un maintien rigide entre les capteurs garantissant une position relative constante et sans vibration.

Selon une caractéristique, chaque capteur de paramètre est embarqué dans un boitier. Avantageusement les boitiers présentent des dimensions différentes en fonction du type de capteur qu'ils embarquent.

Cette caractéristique permet de protéger les capteurs des agressions extérieures et permet au système de détection de fonctionner en toute circonstance, de jour comme de nuit, quelles que soient les conditions climatiques. Cette caractéristique permet également d'avoir une modularité sur le nombre de boîtiers à installer, en fonction des performances visées ou des capteurs de paramètre utilisés. Selon une autre caractéristique, chaque boitier est supporté par une plaque de fixation.

Selon une variante de réalisation, chaque boitier comporte une chambre de tranquilisation.

Cette caractéristique permet de protéger les capteurs des projections telles que l'eau ou la poussière dues à l'avancement du véhicule et des projections générées par le passage d'une bande de frottement sur un fil de contact, quel que soit le sens de circulation du véhicule.

Selon une variante de réalisation, ladite au moins une bande de frottement est plane. Cette caractéristique permet de limiter l'amplitude de variation de l'écart entre le capteur de paramètres et le fil de contact par rapport aux bandes de frottement courbées de l'art antérieur.

Selon une variante de réalisation l'arbre support est en aluminium

D'autres caractéristiques et avantages de l'invention apparaîtront à la lecture de la description détaillée qui suit pour la compréhension de laquelle on se reportera aux dessins annexés dans lesquels :
[Fig 1] est une représentation schématique d'un pantographe connu de l'art antérieur;
[Fig 2] est une représentation schématique d'un pantographe selon l'invention;
[Fig 3] est une vue agrandie, de face, d'un système de détection selon une caractéristique de l'invention;
[Fig 4] est une vue agrandie, de profil, d'un système de détection selon une caractéristique de l'invention ;
[Fig 5] est une vue partielle, de profil, d'un système de détection selon une caractéristique de l'invention ;
[Fig 6] est une représentation schématique d'un pantographe selon l'invention en position repliée.

Nous utiliserons un trièdre XYZ afin de montrer l'angle de vue des figures. L'axe X peut ainsi correspondre à l'axe d'avancement du véhicule sur lequel se fixe le pantographe, l'axe Y un axe transversal correspondant à la largeur de la tête de captage et l'axe Z à un axe d'élévation correspondant à un axe perpendiculaire à l'axe transversal Y et à l'axe d'avancement X qui suit une direction sensiblement verticale.

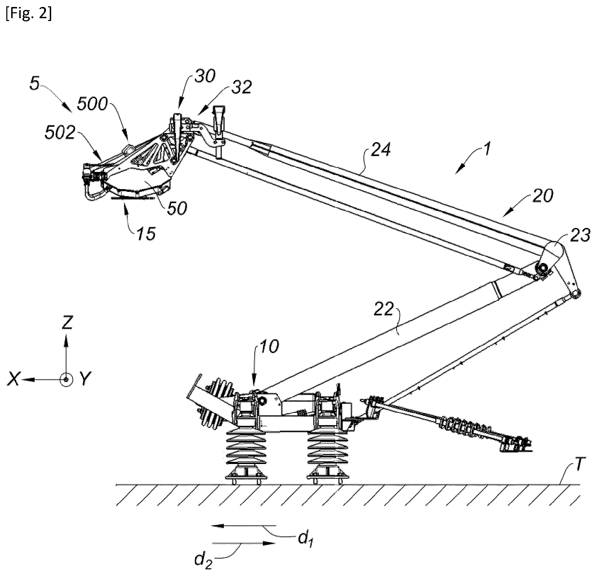

On entend par l'expression « en amont », la disposition des capteurs par rapport à la tête de captage lorsque le véhicule circule suivant une direction d1 (figure 2) et en « aval », la disposition des capteurs par rapport à la tête de captage opposée.

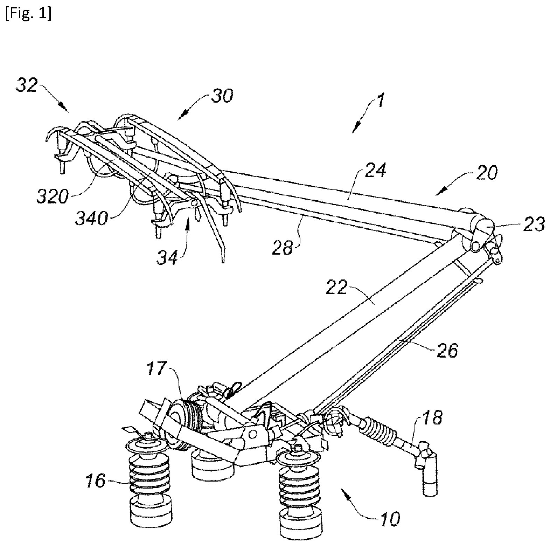

La figure 1 représente un pantographe 1 de l'art antérieur comprenant un bâti 10, un système articulé 20 qui s'étend à partir du bâti 10 et une tête de captage 30.

Le bâti 10 est conçu pour être fixé sur une toiture d'un véhicule (non représenté) et pour supporter le système articulé 20 et la tête de captage 30.

Le bâti 10 est fixé à la toiture d'un véhicule (non représenté) au moyen de trois pieds isolateurs 16.

Le système articulé 20 comprend un bras inférieur 22 dont l'une des extrémités est fixée au bâti 10 et l'autre extrémité est reliée à un bras supérieur 24 au moyen d'une d'articulation 23 telle qu'une liaison pivot. L'articulation 23 permet au bras 20 d'être articulé. Le système articulé 20 comprend également une tringle inférieure 26 qui s'étend le long du bras inférieur 22 et qui est fixée à l'une de ses extrémités au bâti 10 et à son autre extrémité au niveau de l'articulation 23 du système articulé 20.

Le système articulé comprend d'autre part une bielle de positionnement communément nommée tube anti-balançant 28 qui s'étend le long du bras supérieur 24 et qui est fixé à l'une de ses extrémités à l'articulation 23 du système articulé 20 et à son autre extrémité à la tête de captage 30. Le tube anti-balançant 28 permet de maintenir la tête de captage 30 stable.

La tête de captage 30 comprend un archet 32 et un arbre support 340 qui est fixé au bras supérieur 24 du système articulé 20 au moyen de pattes de liaison (non visibles). L'archet 32 est pourvu de deux bandes de frottement 320 parallèles, sensiblement recourbées, qui sont reliées à l'arbre support 340 au moyen de suspensions et de lames de fixation.

L'arbre support 340 sert à faire la liaison entre l'archet 32 et le système articulé 20.

Le pantographe est configuré pour se déployer entre une position dépliée dans laquelle les bandes de frottement 320 de l'archet 32 sont en contact avec des fils de contact (non représentés), et une position repliée dans laquelle l'archet est sensiblement agencé au niveau du bâti 10.

Le déploiement est réalisé, en outre, au moyen d'un coussin pneumatique 17 alimenté en air par le biais d'un tuyau isolant 18 fixé au bâti 10. Le tuyau peut être fixé au bâti par exemple au moyen d'une vis.

La figure 2 représente un pantographe 1 selon l'invention. Le pantographe est fixé sur un véhicule T circulant selon un axe d'avancement X. Le pantographe 1 comprend classiquement un bâti 10, un système articulé 20 qui s'étend à partir du bâti et qui comprend un bras inférieur 22 et un bras supérieur 24, et une tête de captage 30. Dans le présent exemple, la tête de captage 30 est adaptée pour capter un courant d'alimentation d'un fil de contact pour ligne d'alimentation électrique aérienne de véhicules. Le pantographe peut réaliser un captage de courant ou non. Le pantographe sert essentiellement à positionner les capteurs de paramètres à proximité de la caténaire.

La tête de captage 30 présente un axe transversal Y sensiblement perpendiculaire à l'axe d'avancement X lorsque le pantographe 1 est fixé sur le véhicule. La tête de captage 30 comprend un archet 32. Dans le présent exemple l'archet 32 comprend une unique bande de frottement. Dans une variante non représentée, l'archet peut comprendre deux bandes de frottement. L'archet 32 est relié au système articulé 20 par l'intermédiaire de l'arbre support 340.

Le pantographe comprend également un système de détection 5 qui comprend une pluralité de boitiers 50 dans lesquels des capteurs de paramètres sont embarqués.

Les capteurs de paramètres sont déportés à distance de la bande de frottement (non visible) par rapport à l'axe d'avancement X et d'un axe d'élévation Z au moyen d'un dispositif de déport 500. Le dispositif de déport 500 comprend des barres de fixation (non visibles) s'étendant selon une direction parallèle à l'axe transversal Y et des plaques de fixation 502 fixées aux barres de fixation qui s'étendent dans un plan perpendiculaire à l'axe transversal Y.

Dans le présent exemple, les capteurs de paramètres sont disposés en amont de la tête de captage 30 lorsque le véhicule circule suivant la direction d1.

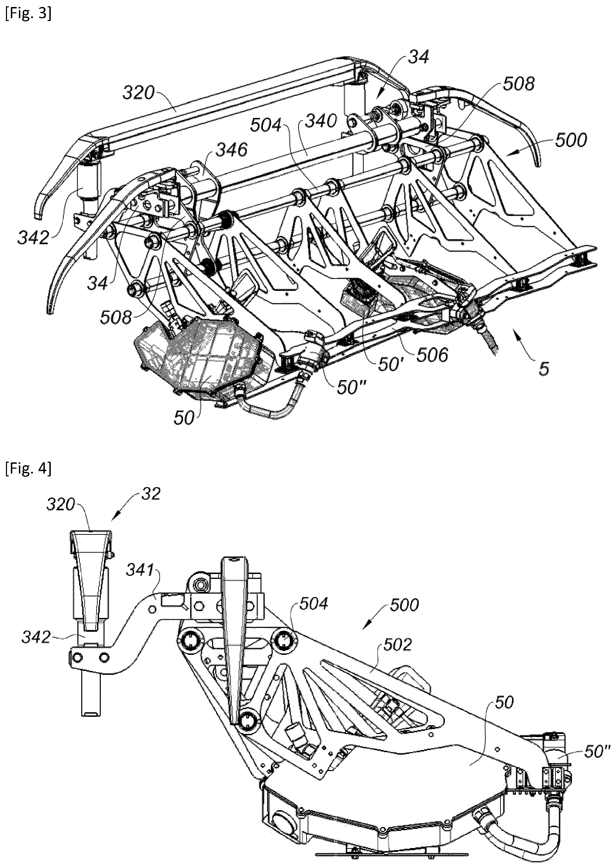

Le système de détection sera décrit de manière plus précise en figure 3.

La figure 3 est une vue agrandie du système de détection 5 selon l'invention. Le système de détection 5 comprend un dispositif de déport 500. Le dispositif de déport 500 comporte des barres de fixation 504 parallèles entre elles et six plaques de fixation 502 adjacentes. Les plaques de fixation 502 comprennent des ajourages qui permettent de réduire la masse de ces plaques 502.

Les plaques de fixations 502 sont fixées aux barres de fixation 504.

Les barres de fixation 504 sont reliées à la tête de captage 30 au moyen de trois équerres de fixation 508.

Le système de détection 500 comprend également des capteurs de paramètres embarqués dans des boitiers reliés aux plaques de fixation 502. Dans le présent exemple deux boitiers convertisseur 50 sont fixés chacun sur une plaque de fixation 502. Sur chaque boitier convertisseur 50 est fixé un boitier caméra 50' comprenant une caméra et un boitier laser 50" comprenant un laser. Le boitier convertisseur est fixé à la plaque de fixation par exemple au moyen de vis.

Bien évidemment, le système de détection n'est pas limité à cette configuration. Par exemple le système de détection peut comprendre six boitiers convertisseur fixés chacun à une plaque de fixation 502.

Un espacement est prévu entre chaque plaque de fixation 502 pour permettre une circulation d'air lorsque le véhicule est en mouvement de sorte à réduire l'impact aérodynamique du système de détection.

Les plaques de fixation 502 sont reliées les unes aux autres au moyen de deux barres de liaison 506. Ces barres de liaison 506 permettent d'éviter un écartement des plaques de fixation 502 lorsque le véhicule circule.

La tête de captage 30 comporte un arbre support 340 en aluminium relié au bras supérieur 24 (non représenté) du système articulé 20 au moyen de pattes de liaison 346. La bande de frottement 320 de l'archet 32 est fixée à cet arbre support 340 au moyen de deux suspensions 342 disposées à chaque extrémité de la bande de frottement. Chaque suspension 342 est reliée à l'arbre support 340 par le biais de lames de fixation 341. La bande de frottement est plane sur l'intégralité de sa surface. L'arbre support 340 sert à faire la liaison entre l'archet 32, le système articulé 20 et le système de détection 5.

La figure 4 est une vue de profil du système de détection selon l'invention qui illustre une disposition en triangulation des barres de fixation 504 sur lesquels sont fixées les plaques de fixation 502 ajourées. Les barres de fixation 504 sont reliées à l'arbre support 340 (non visible) au moyen d'équerres de fixation (non visibles).

Comme décrit précédemment, la bande de frottement 320 de l'archet 32 est reliée à l'arbre support 340 (non visible) par l'intermédiaire de deux suspensions 342 disposées à chaque extrémité de la bande de frottement, reliées à l'arbre support par les lames de fixation 341.

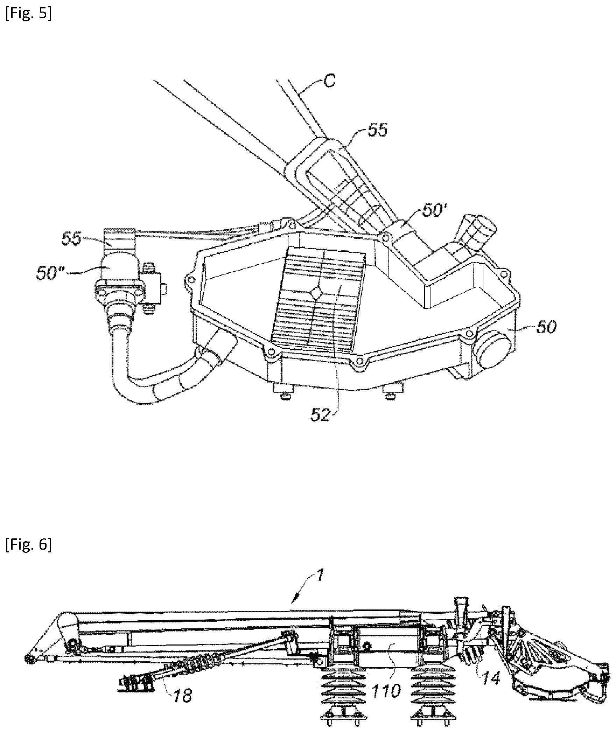

La figure 5 est une vue partielle du système de détection selon une caractéristique de l'invention.

Dans cet exemple, le système de détection comprend une pluralité de boitiers convertisseurs 50 pouvant embarquer un convertisseur 52, auxquels sont reliés des boitiers caméras 50' et des boitiers lasers 50".

Les boitiers caméras et les boitiers lasers embarquent réciproquement des caméras et des lasers. Les caméras et les lasers sont des capteurs de paramètre particulièrement utiles dans la détection d'une usure des fils de contact. Le champ de détection C des caméras a été représenté.

Dans cet exemple, chaque boitier caméra et chaque boitier laser est équipé d'une chambre de tranquilisation 55.

Ces chambres de tranquilisation 55 permettent de protéger les capteurs des projections telles que l'eau ou la poussière pouvant survenir lors de la circulation du véhicule T dans les deux directions de circulation d1 et d2 ainsi que des projections générées par le frottement de la bande de frottement sur le fil caténaire lorsque le véhicule circule suivant la direction d2. Ainsi le système de détection est protégé des projections quel que soit le sens de circulation du véhicule.

La figure 6 représente le pantographe 1 en position repliée. Le pantographe comprend six tuyaux d'alimentation pneumatiques isolants 18 qui sont fixés au bâti 10. La multiplication du nombre de ces tuyaux d'alimentation permet d'assurer des fonctions supplémentaires comme une alimentation en air de souflettes pouvant être positionnées dans les chambres de tranquilisation, une alimentation en air afin de climatiser les boîtiers, et le transfert des données pouvant être récoltées par le biais de fibres optiques. Le bâti 10 comprend également un boitier 110 qui renferme un convertisseur prévu pour l'alimentation du système de détection 5. Le boitier 110 est préférentiellement fixé sur le bâti 10 et est réalisé en aluminium.

Bien évidemment, l'invention n'est pas limitée aux exemples qui viennent d'être décrits et de nombreux aménagements peuvent être apportés à ces exemples sans sortir du cadre de l'invention. Notamment, les différentes caractéristiques, formes, variantes et modes de réalisation de l'invention peuvent être associés les uns avec les autres selon diverses combinaisons dans la mesure où ils sont couverts par l'étendue des revendications ci-jointes,

## Revendications

1. Pantographe instrumenté (1) configuré pour détecter au moins une usure d'un fil de contact d'une ligne d'alimentation électrique aérienne de véhicules circulant notamment sur une voie ferrée suivant un axe d'avancement (X) de l'aval vers l'amont, le pantographe comprenant :
- Un bâti (10) conçu pour être fixé sur un véhicule,
- Un système articulé (20) s'étendant à partir du bâti,
- Une tête de captage (30) présentant un axe transversal (Y) sensiblement perpendiculaire à l'axe d'avancement (X) lorsque le pantographe est fixé sur le véhicule, et comportant un arbre support (340) et un archet (32), l'archet (32) étant muni d'au moins une bande de frottement (320) et étant relié au système articulé (20) au moyen de l'arbre support (340), et
- Un système de détection (5) comportant au moins un capteur du type caméra et au moins un capteur du type laser pour mesurer l'usure du fil de contact et un dispositif de déport (500), relié à la tête de captage (30), configuré pour disposer lesdits capteurs à distance de la tête de captage (30), en déport par rapport à l'axe d'avancement (X) et en amont de la tête de captage (30).

2. Pantographe selon la revendication 1 **caractérisé en ce que** le dispositif de déport (500) est configuré pour disposer ledit au moins un capteur à distance de la tête de captage (30), en déport par rapport à un axe d'élévation (Z).

3. Pantographe selon l'une des revendications 1 à 2 **caractérisé en ce que** le système de détection (5) comporte des barres de fixation (504) s'étendant selon une direction parallèle à l'axe transversal (Y) et des plaques de fixation (502) fixées aux barres de fixation (504) et s'étendant dans un plan perpendiculaire à l'axe transversal (Y).

4. Pantographe selon la revendication 3 **caractérisé en ce que** le système de détection (5) comporte au moins trois barres de fixation (504) parallèles, agencées en triangulation.

5. Pantographe selon la revendication 3 ou 4 **caractérisé en ce que** les barres de fixation (504) sont reliées à l'arbre support (340) au moyen d'une équerre de fixation (508).

6. Pantographe selon l'une des revendications 3 à 5 **caractérisé en ce que** les plaques de fixation (502) sont parallèles les unes par rapport aux autres.

7. Pantographe selon l'une des revendication 3 à 6 **caractérisé en ce que** les plaques de fixation (502) sont ajourées.

8. Pantographe selon l'une des revendications 3 à 6 **caractérisé en ce que** les plaques de fixation 502 sont reliées entre elles par au moins une barre de liaison (506) s'étendant selon une direction parallèle à l'axe transversal (Y).

9. Pantographe selon l'une quelconque des revendications précédentes **caractérisé en ce que** chaque capteur est embarqué dans un boitier (50, 50', 50").

10. Pantographe selon la revendication précédente **caractérisé en ce que** chaque boitier (50, 50', 50") est supporté par une plaque de fixation (502).

11. Pantographe selon la revendication précédente **caractérisé en ce que** chaque boitier (50', 50") comprend une chambre de tranquilisation (55).

12. Pantographe selon l'une quelconque des revendications précédentes **caractérisé en ce que** ladite au moins une bande de frottement (320) de l'archet (32) est plane.

## Patentansprüche

1. Instrumentierter Stromabnehmer (1), der dazu ausgelegt ist, mindestens einen Verschleiß eines Kontaktdrahts einer Stromversorgungs-Oberleitung von Fahrzeugen zu erfassen, die insbesondere auf einem Eisenbahngleis gemäß einer Fahrtrichtung (X) von stromabwärts nach stromaufwärts verkehren, wobei der Stromabnehmer umfasst:
- ein Gestell (10), das dazu konstruiert ist, an einem Fahrzeug befestigt zu werden,
- ein Gelenksystem (20), das sich ab dem Gestell erstreckt,
- einen Abnehmerkopf (30), der eine Querachse (Y) aufweist, die im Wesentlichen senkrecht zu der Fahrtrichtung (X) steht, wenn der Stromabnehmer am Fahrzeug befestigt ist, und eine Tragwelle (340) und einen Bügel (32) aufweist, wobei der Bügel (32) mit mindestens einem Reibstreifen (320) versehen ist und über die Tragwelle (340) mit dem Gelenksystem (20) verbunden ist, und
- ein Erfassungssystem (5), das mindestens einen Sensor vom Typ Kamera und mindestens einen Sensor vom Typ Laser zur Messung des Verschleißes des Kontaktdrahts und eine mit dem Abnehmerkopf (30) verbundenen Versatzvorrichtung (500) aufweist, die dazu ausgelegt ist, die Sensoren in einem Abstand zum Abnehmerkopf (30), versetzt zu der Fahrtrichtung (X) und stromaufwärts vom Abnehmerkopf (30), anzuordnen.

2. Stromabnehmer nach Anspruch 1, **dadurch gekennzeichnet, dass** die Versatzvorrichtung (500) dazu ausgelegt ist, den mindestens einen Sensor in einem Abstand vom Abnehmerkopf (30), versetzt zu einer Höhenachse (Z), anzuordnen.

3. Stromabnehmer nach einem der Ansprüche 1 bis 2, **dadurch gekennzeichnet, dass** das Erfassungssystem (5) Befestigungsstangen (504), die sich gemäß einer zu der Querachse (Y) parallelen Richtung erstrecken, und an den Befestigungsstangen (504) befestigte Befestigungsplatten (502) befestigt sind und sich in einer Ebene senkrecht zu der Querachse (Y) erstrecken, aufweist.

4. Stromabnehmer nach Anspruch 3, **dadurch gekennzeichnet, dass** das Erfassungssystem (5) mindestens drei parallele Befestigungsstangen (504) aufweist, die dreieckig angeordnet sind.

5. Stromabnehmer nach Anspruch 3 oder 4, **dadurch gekennzeichnet, dass** die Befestigungsstangen (504) mittels eines Befestigungswinkels (508) mit der Tragwelle (340) verbunden sind.

6. Stromabnehmer nach einem der Ansprüche 3 bis 5, **dadurch gekennzeichnet, dass** die Befestigungsplatten (502) parallel zueinander sind.

7. Stromabnehmer nach einem der Ansprüche 3 bis 6, **dadurch gekennzeichnet, dass** die Befestigungsplatten (502) durchbrochen sind.

8. Stromabnehmer nach einem der Ansprüche 3 bis 6, **dadurch gekennzeichnet, dass** die Befestigungsplatten (502) durch mindestens eine Verbindungsstange (506) miteinander verbunden sind, die sich in einer zu der Querachse (Y) parallelen Richtung erstreckt.

9. Stromabnehmer nach einem der vorstehenden Ansprüche, **dadurch gekennzeichnet, dass** jeder Sensor in einem Gehäuse (50, 50', 50") untergebracht ist.

10. Stromabnehmer nach vorstehendem Anspruch, **dadurch gekennzeichnet, dass** jedes Gehäuse (50, 50', 50") von einer Befestigungsplatte (502) getragen wird.

11. Stromabnehmer nach vorstehendem Anspruch, **dadurch gekennzeichnet, dass** jedes Gehäuse (50', 50") eine Beruhigungskammer (55) umfasst.

12. Stromabnehmer nach einem der vorstehenden Ansprüche, **dadurch gekennzeichnet, dass** der mindestens eine Reibstreifen (320) des Bügels (32) eben ist.

## Claims

1. An instrumented pantograph (1) configured to detect at least a wear of a contact wire of an overhead power supply line for vehicles traveling, in particular, on a railway track along a direction of travel (X) from downstream to upstream, the pantograph comprising:
- A frame (10) designed to be mounted on a vehicle,
- An articulated system (20) extending from the frame,
- A contact head (30) having a transverse axis (Y) substantially perpendicular to the direction of travel (X) when the pantograph is mounted on the vehicle, and comprising a support shaft (340) and an arm (32), the arm (32) being provided with at least one friction strip (320) and being connected to the articulated system (20) by means of the support shaft (340), and
- A detection system (5) comprising at least one camera-type sensor and at least one laser-type sensor for measuring the wear of the contact wire, and an offset device (500), connected to the contact head (30), configured to position said sensors at a distance from the contact head (30), offset relative to the direction of travel (X) and upstream of the contact head (30).

2. The pantograph according to claim 1, **characterized in that** the offset device (500) is configured to position said at least one sensor at a distance from the contact head (30), offset relative to an elevation axis (Z).

3. The pantograph according to one of claims 1 to 2, **characterized in that** the detection system (5) comprises mounting bars (504) extending in a direction parallel to the transverse axis (Y) and mounting plates (502) attached to the mounting bars (504) and extending in a plane perpendicular to the transverse axis (Y).

4. The pantograph according to claim 3, **characterized in that** the detection system (5) comprises at least three parallel mounting bars (504) arranged in a triangular configuration.

5. The pantograph according to claim 3 or 4, **characterized in that** the mounting bars (504) are connected to the support shaft (340) by means of a mounting bracket (508).

6. The pantograph according to one of claims 3 to 5, **characterized in that** the mounting plates (502) are parallel to one another.

7. The pantograph according to one of claims 3 to 6, **characterized in that** the mounting plates (502) are perforated.

8. The pantograph according to any one of claims 3 to 6, **characterized in that** the mounting plates (502) are connected to one another by at least one connecting bar (506) extending in a direction parallel to the transverse axis (Y).

9. The pantograph according to any one of the preceding claims, **characterized in that** each sensor is housed in a housing (50, 50', 50").

10. The pantograph according to the preceding claim, **characterized in that** each housing (50, 50', 50") is supported by a mounting plate (502).

11. The pantograph according to the preceding claim, **characterized in that** each housing (50', 50") comprises a damping chamber (55).

12. The pantograph according to any one of the preceding claims, **characterized in that** said at least one friction strip (320) of the arm (32) is plane.
